# EUROPEAN PATENT SPECIFICATION

(11) **EP 1 607 711 B1**
(45) Date of publication and mention of the grant of the patent: **12.03.2014**
(21) Application number: 04722946.3
(22) Date of filing: 24.03.2004
(51) Int. Cl.: F42B 3/103, F42B 3/107, F42B 3/195, B60R 21/26

(54) **IGNITOR ASSEMBLY**
ZÜNDANORDNUNG
ENSEMBLE D'ALLUMAGE

(30) Priority: 26.03.2003 JP 2003084212
(43) Date of publication of application: 21.12.2005
(73) Proprietor: Daicel Chemical Industries, Ltd., Kita-ku, Osaka-shi Osaka 530-0001 (JP)
(72) Inventor: HARADA, Hiroshi, Himeji-shi, Hyogo (JP); ODA, Shingo, Himeji-sho, Hyogo (JP); KATO, Kazuhiro, Shisou-gun, Hyogo (JP); KINOSHITA, Gen, Himeji-shi, Hyogo (JP)
(74) Representative: Grünecker, Kinkeldey, Stockmair & Schwanhäusser
(86) International application number: PCT/JP2004/003997
(87) International publication number: WO 2004/085951

(56) References cited:
- EP-A1- 1 217 325
- WO-A1-01/31281
- JP-A- 09 126 695
- JP-A- 2002 090 097
- JP-U- 05 052 599
- US-A- 5 487 559
- US-A- 5 533 754
- US-A- 6 007 096
- ANONYMOUS: "Variable output initiator" RESEARCH DISCLOSURE, MASON PUBLICATIONS, HAMPSHIRE, GB, vol. 384, no. 19, 1 April 1996 (1996-04-01), XP007120998 ISSN: 0374-4353

## Description

### Field of the Invention

The present invention relates to an igniter assembly applicable to a gas generator for an air bag and a method of manufacturing the same.

### Background of the Invention

A gas generator for an air bag is to be applied to an air bag system mounted in a vehicle for security of an occupant, and an igniter assembly for igniting and burning a gas generating agent in an activation is installed in it.

An igniter assembly comprises an igniter having a priming and a metal collar to hold the igniter, and the igniter and the metal collar are integrated by resin charged by injection-molding between the igniter and the metal collar.

A resin just after injection-molding is in a fusion state, but as a result of shrinking in a process of curing in time, a gap is possibly produced in an interface between a metal collar and a resin. When a gap is thus produced, there is a possibility that moisture comes in from the outside atmosphere, and makes a priming, a transfer charge and a gas generating agent absorb moisture to deteriorate the combustion quality.

In addition, when an igniter assembly is built in a gas generator for an air bag, with a change of temperature in the operating environment of a gas generator for an air bag, it is possible that metal and resin composing an igniter assembly repeat thermal expansion and thermal shrinkage. When such a cycle of expansion and shrinkage is repeated, accompanied by difference of coefficient of thermal expansion between metal and resin, there is a possibility that a gap is produced in an interface between a metal collar and a resin.

Reliable operation is demanded on a gas generator for an air bag for not less than 10 years, that is, a service life of a vehicle. Therefore, if a priming, a transfer charge and a gas generating agent absorb moisture, reliable operation may not be obtained. In view of this, it is very important to prevent moisture from entering an igniter assembly. As prior art in relation to the invention, JP-A 11-321541 and US Patent 5,487,559 can be cited.

### Disclosure of the Invention

An object of the present invention is to provide an igniter assembly which can maintain reliable operation of a gas generator for an air bag for a long period when applied to a gas generator for an air bag used in an air bag system of an automobile for vehicle occupant protection, and a method of manufacturing the same.

The above objects are solved by the features of appended claim 1.

A material of the metal collar is not particularly limited, and for example, iron or aluminum is preferable. Stainless can be used instead of iron, but iron is preferable from an aspect of production cost.

Also, by making both surfaces in the same plane, extra resin is not necessary and a shape of the igniter assembly is simplified. Accordingly, when the igniter assembly is installed into a gas generator for an air bag, in addition to being able to simplify a shape of an installation portion in the gas generator for an air bag and unnecessary gap is not produced, which are preferable.

The invention further provides an igniter assembly in which the protruding portion extending axially upward from a collar main body portion is a cylindrical protruding portion and the protruding portion extending radially inward from a collar main body portion is a circular protruding portion.

In case of providing one or both of the protruding portion extending axially upward (the cylindrical protruding portion) and the protruding portion extending radially inward (the circular protruding portion) as mentioned above, they function not to produce a continuous gap between an inner surface of the metal collar and the resin (the first effect) and also function to prevent the charged resin from falling off the metal collar (the second effect) at the time when the resin, which is charged between the metal collar and the igniter by injection-molding, shrinks in a curing process from fusion state.

The first effect is mainly done by the protruding portion extending axially upward (the cylindrical protruding portion) and the protruding portion extending radially inward (the circular protruding portion) and the second effect is mainly done by the protruding portion extending radially inward (the circular protruding portion).

A material of the metal collar is not particularly limited, and for example, iron is preferable.

As the above invention, when, in the cylindrical protruding portion, a contacting portion where a circular end surface contacts an outer surface is cut and formed in a cylindrical stepped portion or a circular inclined surface, the cylindrical stepped portion or the circular inclined surface can be sandwiched in the resin. Thereby, in curing of the resin after injection, the cylindrical stepped portion or the circular inclined surface is strongly held due to resin's shrinkage, and production of a gap between the metal collar and the cured resin can be prevented. Therefore, especially the above first effect is improved more.

As the above invention, when the cylindrical stepped portion or the cylindrical inclined surface of the cylindrical protruding portion and an inner surface are covered with the resin and an outer surface expect for the cylindrical stepped portion or the cylindrical inclined surface is not covered with the resin, and when the outer surface of the substantially cylindrical metal collar and an outer surface of the resin are substantially flush with each other in the axial direction, compared to a case of covering with resin in a way of wrapping the cylindrical protruding portion, the invention of claim 1 is able to reduce the amount of the resin needed for manufacture of one igniter assembly.

The invention provides an igniter assembly in which the substantially cylindrical metal collar further has a circular protruding portion extending radially inward from a collar main body portion, a circular stepped portion or a circular inclined surface is arranged on a lower surface side of the circular protruding portion, and the circular stepped portion or the circular inclined surface is covered with the resin.

In addition, the circular stepped portion or the circular inclined surface formed on the lower surface side of the circular protruding portion and further the circular stepped portion or the circular inclined surface may have an arc surface (a surface with R) formed by a shape of a cutting tool (for example, shape of a byte cutting edge) when processed by a cutting method. State of the curved surface of the arc surface is not limited, and R (radius of curvature) may be around 0.1 to 0.5mm.

A material of the metal collar is not particularly limited, and for example, aluminum is preferable.

As the above invention, when a circular stepped portion or a circular inclined surface is arranged on a lower surface side of the circular protruding portion, it is in particular preferable since the above first effect is improved more. Further, since the circular stepped portion or the circular inclined surface is pinched by the resin, the above second effect is also improved.

The invention provides an igniter assembly in which an igniter and a substantially cylindrical metal collar for holding the igniter from outside are integrated by a resin existing between the igniter and the metal collar,
wherein the metal collar has such a strength as slightly deforms on receiving injection pressure by an injection-molding means of a resin,
the resin is charged between the igniter and the metal collar by the injection-molding means, and
a helium leakage quantity prescribed in JIS Z2331 in a contact surface of the metal collar with the resin is less than 1x10⁻⁶ Pa·m³/s (air conversion).

When the resin is injection-molded, the metal collar slightly deforms on receiving its pressure, but after the injection, the resin is cured and the volume thereof is slightly shrinks. At this time, the metal collar moves to return to the original shape, but, it is deformed slightly first, so that, even when it has returned to the original shape (or even when a shape similar to the original one), a gap can be hardly formed between the resin and the metal collar.

In the above invention, slightly deforming on receiving injection pressure by an injection-molding means indicates that the deformation is to such an extent that the deformed metal collar can return to the original shape based on restoring force determined by shape, material, and so on.

The invention provides an igniter assembly in which the metal-collar has at least one of a cylindrical protruding portion extending axially upward from a collar main body portion and a circular protruding portion extending radially inward from a collar main body portion, and the cylindrical protruding portion or the circular protruding portion slightly deforms on receiving injection pressure by an injection molding-means of a resin.

Particularly in this invention, in order to exhibit the first effect, the circular protruding portion is preferably formed.

The invention provides an igniter assembly in which, in the cylindrical protruding portion, a contacting portion where a circular end surface contacts an outer surface is cut and formed in a cylindrical stepped portion or a circular inclined surface, the circular protruding portion has a circular stepped portion or a circular inclined surface on a lower surface side, and the cylindrical protruding portion or the circular protruding portion slightly deforms on receiving injection pressure by an injection-molding means of a resin.

As the above each invention, when the metal collar (at least one of the cylindrical protruding portion and the cylindrical protruding portion) has such a strength that slightly deforms on receiving injection pressure by an injection-molding means of a resin, the metal collar (at least one of the cylindrical protruding portion and the circular protruding portion) slightly deforms at the time of injection-molding of the resin, but after the deformation, a returning force to the original from the deformed state (restoring force) arises. Thereby, since the restoring force acts to close a gap produced by shrinkage of the resin, the above first effect is exhibited.

The invention provides an igniter assembly in which the metal collar is made of aluminum or aluminum alloy that slightly deforms by the injection pressure of not less than 9Mpa.

A method of manufacturing an igniter assembly is disclosed, comprising the steps of loading resin between the substantially cylindrical metal collar and the igniter by an injection-molding means at the injection pressure of not less than 9MPa and then curing the resin with keeping the pressure of not less than 9MPa.

In injection molding of resin, as above, the metal collar slightly deforms, but by keeping the pressure, a resin in an amount corresponding to the shrinkage volume of the resin is provided. Thereby, since a contacting state of the metal collar with the resin becomes close and a gap can be hardly formed between them, the first effect becomes easily to be exhibited.

In the present invention, as the resin integrating the metal collar and the igniter, one having the mold shrinkage factor of not higher than 1% is desirable, and particularly that of 0.1-0.8% is desirable. When the mold shrinkage factor is in the above range, a gap can be hardly formed between the metal collar and the igniter.

The resin used in the present invention can be any one of thermoplastic resin and thermosetting resin, but in view of injection-moldability, thermoplastic resin is preferable. Further, the resin can optionally contain about 20 to 50 weight% of inorganic filler such as glass fiber.

The resin used in the present invention preferably has the coefficient of linear expansion of not more than 8 x 10⁻⁵/°C, the tensile strength of not less than 100 MPa, and the dielectric breakdown voltage of not less than 10 MV/m. In particular, the tensile strength is preferably not more than the range of 170MPa to 250 MPa.

Further, in order to increase moisture proof, the resin used in the present invention preferably has the water absorption of 0.005 to 0.5% and more preferably 0.005 to 0.3% after water immersion at 23°C for 24 hours, and preferably has the tensile strength of 70 to 250MPa and more preferably 100 to 250MPa after water immersion at 23°C for 24 hours.

As the resin used in the present invention, polyamide resin (preferably nylon 6/12), polyarylate, polybutylene terephthalate, polyphenylene sulfide or liquid crystal polymer can be quoted.

In the present invention, entry of moisture by way of an igniter assembly can be prevented without increase of production cost of an igniter assembly. And, in the gas generator using this igniter assembly, since passage of moisture by way of an igniter assembly can be prevented, moisture absorption or degradation of a gas generating agent (gunpowder) can be effectively prevented and a gas generator which can maintain the initial performance even after long time use can be realized.

### Brief Description Of The Drawings

Fig.1 is a vertical cross section showing an igniter assembly.
Fig.2 is a figure for explaining operation of an igniter assembly of Fig. 1.
Fig.3 is a vertical cross section showing another embodiment of an igniter assembly.
Fig.4 is a vertical cross section showing a gas generator for an air bag using an igniter assembly.

### Explanation of Reference Numerals

1 igniter assembly
10 igniter
20 metal collar
22 collar main body portion
24 cylindrical protruding portion
26 circular protruding portion
28 skirt portion
30 resin

### Preferred Embodiments of the Invention

### (1) Embodiment 1

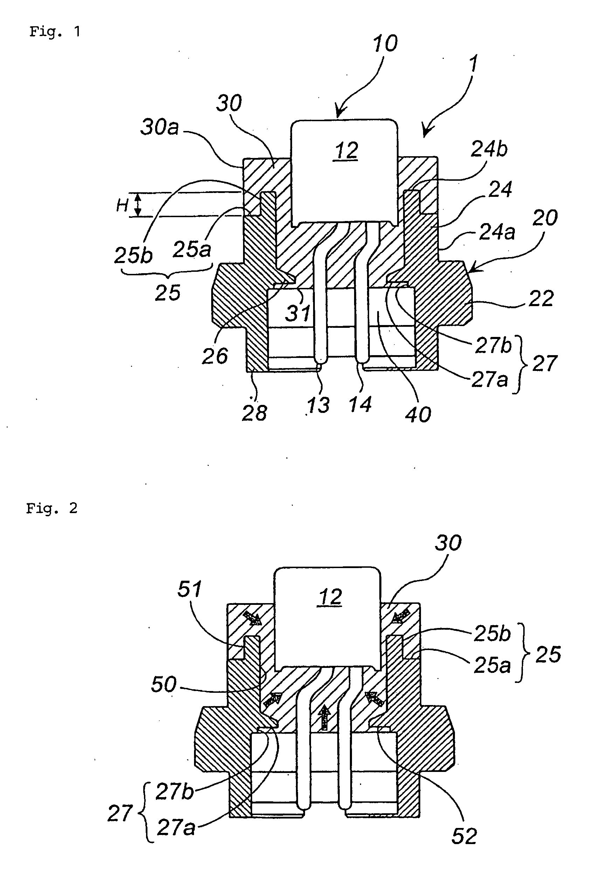

According to Fig. 1, an embodiment of an igniter assembly will be explained. Fig.1 is an axial (vertical) cross section of an igniter assembly.

An igniter assembly 1 includes an igniter 10 and a substantially cylindrical metal collar 20 for holding the igniter 10 from outside, a resin 30 is charged between the igniter 10 and the metal collar 20, and the igniter 10 and the metal collar 20 are integrated.

The igniter 10 contains an igniting portion 12 provided with a priming and two electroconductive pins 13 and 14 which become a path supplying the electric current necessary to ignite and burn the priming.

The metal collar 20 comprises a collar main body portion 22 having the biggest outer diameter, a cylindrical protruding portion 24 extending axially upward from the collar main body portion 22, a circular protruding portion 26 extending radially inward from the collar main body portion 22, and a skirt portion 28 extending axially downward from the collar main body portion 22. A material of such a metal collar 20 is preferably iron or aluminum, and it can be replaced by other metal material such as stainless.

The size of inner diameter of the metal collar 20 is of such an extent that, when the igniter 10 is accommodated in it, a space for loading the resin 30 between the igniter 10 and an inner surface of the metal collar 20 can be secured.

In the cylindrical protruding portion 24, a contacting portion where an outer surface 24a contacts a circular end surface 24b is cut and formed in a cylindrical stepped portion 25 comprising a step bottom surface 25a and a step vertical wall surface 25b. The circular end surface 24b and the step bottom surface 25a are formed to be parallel to each other, or to be approximately parallel in the radial direction.

Size H of a step of the cylindrical stepped portion 25 (height H of the step vertical wall surface 25b) can be arranged in the range of 0.2 to 0.8 mm.

The lower surface side (the space 40 side) of the circular protruding portion 26 is cut and formed in a circular stepped portion 27 comprising a step ceiling surface 27a and a step vertical wall surface 27b. Size of a step of the circular stepped portion 27 (height of the step vertical wall surface 27b) is enough to be of such an extent that a resin can be charged into the circular stepped portion 27.

The resin 30 is charged by an injection-molding means in a state that the igniter 10 is inserted into the metal collar 20. The resin 30 can be selected from thermoplastic resin and thermosetting resin. Polyamide resin is preferable, and in particular, nylon 6/12 is desirable. Furthermore, the resin comprising nylon 6/12 and a glass filler (about one-third of nylon 6/12) charged into the nylon 6/12, which has mold shrinkage factor in the flow direction of 0.2%, mold shrinkage factor in the right angle direction of 0.3% and coefficient of linear expansion 2.3x10-5cm /cm °C is preferable.

The resin 30, as shown in Fig. 1, is charged in a space surrounded by the cylindrical protruding portion 24 and the circular protruding portion 26 in the metal collar 20 in order to be able to fix the igniter 10.

The resin 30 is also charged outside the metal collar 20 containing the cylindrical stepped portion 25 arranged in the cylindrical protruding portion 24, but, the outer surface 24a of the cylindrical protruding portion 24, an outer surface of the collar main body portion 22, and an outer surface of the skirt portion 28 are not covered with a resin. The outer surface 24a of the cylindrical protruding portion 24 and the outer surface 30a of the resin 30 are substantially in the same plane in the axial direction, that is, they form a same plane in which there is substantially no step in the axial direction.

The resin 30 is also charged in a gap surrounded by the step ceiling surface 27a and a step vertical wall surface 27b of the circular stepped portion 27 arranged in the circular protruding portion 26. By this, the resin 30 is prevented from falling out of the metal collar 20.

A space 40 for embedding a connector to be connected to electroconductive pins 13 and 14 is formed by the collar main body portion 22, the circular protruding portion 26 and the skirt portion 28. A surface 31 on the circular protruding portion 26 side of resin 30 is made into a shape being able to secure the space 40, preferably a flat surface.

Next, the first effect which does not produce a gap between the inner surface of the metal collar 20 and the resin 30 and the second effect which prevents the charged resin 30 from falling off from the metal collar 20 will be described with reference to Figs. 1 and 2.

When a resin is charged by an injection-molding means, a resin in a fusion state is charged from the upside in the figure into a space between the igniter 10 and the metal collar 20 to be a state of Fig. 1.

After charging, since the resin 30 shrinks towards the center (the direction shown with the arrow in Fig.2) in a curing process, a gap is possibly produced in an interface 50 between the resin 30 and the inner surfaces of the cylindrical protruding portion 24 and the circular protruding portion 26.

Meanwhile, when the resin 30 shrinks towards the center, an interface 51 between the step vertical wall surface 25b of the cylindrical stepped portion 25 and the resin 30 is to be pressed by the shrinking resin, and an interface 52 between the step ceiling surface 27a of the circular stepped portion 27 and the resin 30 is to be pressed by the shrinking resin. Thereby, even if a gap is produced in the interface 50 by shrinkage of the resin, formation of gap is prevented in the interfaces 51 and 52, and also, formation a continuous gap causing entry of moisture is prevented. Therefore, the first effect is exhibited.

Additionally, in such a case that thermal expansion of the resin 30 occurs due to temperature change of operating environment, a gap is possibly produced in the interfaces 51 and 52. However, in this case, since the inner surface of the metal collar 20 is pressed by the resin 30, a gap is not produced in the interface 50. A case when the resin 30 shrinks due to temperature change of operating environment is as described above. So, in either case, the first effect is brought out.

When the igniter assembly 1 is installed in a gas generator for an air bag used in an air bag system for an automobile, there is vibration in a vehicle on its run. But, since the resin 30 is locked at the cylindrical stepped portion 25 and further the circular protruding portion 26 is held from above and below by the resin 30, the second effect is exhibited.

As described above, the first and the second effects are exhibited in the igniter assembly 1 and consequently, when the igniter assembly 1 is applied to a gas generator for an air bag, entry of moisture into the inside is prevented and also, falling off of the resin 30 is prevented. And therefore, reliable operation is maintained for a long time.

### (2)Embodiment 2

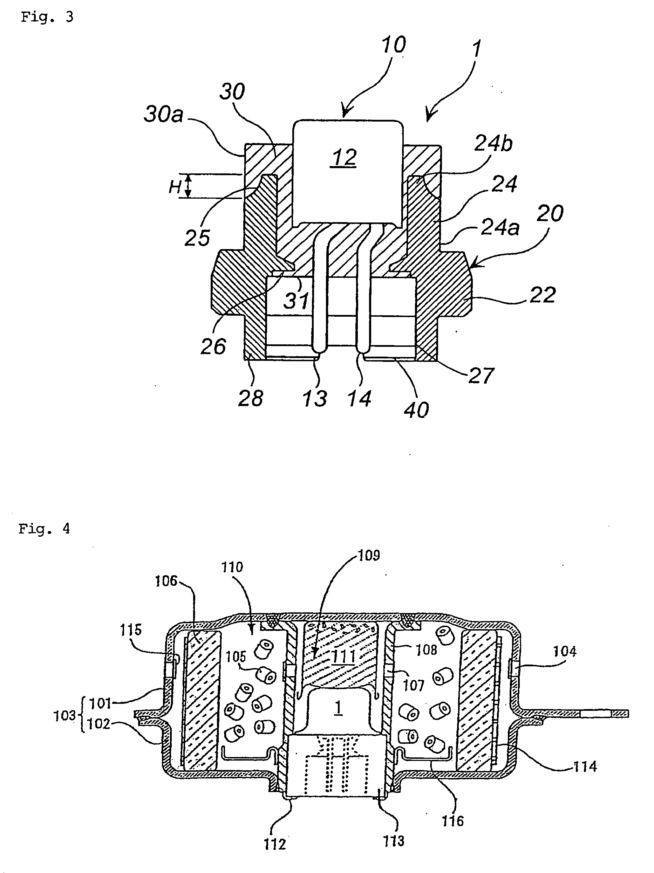

According to Fig. 3, another embodiment of an igniter assembly will be explained. Fig.3 is an axial (vertical) cross section of an igniter assembly. The igniter assembly 1 shown in Fig.3 is different from the igniter assembly 1 shown in Fig. 1 only in that a circular inclined surface 25 is arranged instead of the cylindrical stepped portion 25, and the igniter assembly 1 shown in Fig.3 functions in the same way as the igniter assembly 1 in Fig. 1.

When a gap is produced in the interface 50 shown in Fig. 2 by shrinkage of the resin in a curing process, the interface between the circular inclined surface 25 and the resin 30 (an interface corresponding to the interface 51 of Fig. 2) is pressed by the shrinking resin. Thereby, even in such a case that a gap is produced at the interface 50 by shrinkage of the resin, formation of a gap at the interface 51 is prevented. And therefore, the first effect is exhibited.

In addition, in Figs. 1 and 3, the circular stepped portion 27 can be a circular inclined surface such as the circular inclined surface 25 instead of a combination of a step ceiling surface 27a and a step vertical wall surface 27b. The circular inclined surface in this case functions similarly to the circular stepped portion 27.

In addition, in Fig. 3, the circular inclined surface 25 is an arc surface with R, or alternatively, it may be one which has at least one of the step bottom surface 25a and the step vertical wall surface 25b, formed with an arc surface. The circular stepped portion 27 can be in a similar shape.

### (3)Embodiment 3

Next, other embodiments of the igniter assembly shown in Figs. 1 and 3 will be explained. In the igniter assembly 1 shown in Figs. 1 and 3, by providing the metal collar 20 with such a strength to slightly deform on receiving injection pressure of an injection-molding means of a resin and by adjusting injection condition of a resin, an igniter assembly which can exhibit the first effect is obtained. It will be explained according to Fig 1 as follows.

In Fig. 1, the metal collar 20 comprising the cylindrical protruding portion 24 (which includes the cylindrical stepped portion 25) extending axially upward from the collar main body portion 22, and the circular protruding portion 26 (which includes the circular stepped portion 27) extending radially inward from the collar main body portion 22, is made of aluminum or aluminum alloy, and slightly deforms by the injection pressure of not less than 9 MPa added at an injection-molding of a resin 30.

In a manufacturing process of an igniter assembly, when a fused resin is charged at the injection pressure of not less than 9MPa into a space between the igniter 10 and the metal collar 20, the cylindrical protruding portion 24, that has received injection pressure, deforms to be slightly spread out radially outwardly, and similarly the circular protruding portion 26 deforms to be slightly spread out axially downward.

After loading, curing of the resin is completed in a state of keeping the pressure of not less than 9MPa which is the same as the injection pressure. By keeping the pressure in this manner, a resin in the amount corresponding to a shrinkage volume of the resin is provided.

In the process from loading to curing of resin, the resin 30 shrinks as shown in Fig. 2. Meanwhile, in the deformed cylindrical protruding portion24, restoring force returning radially inwardly is produced, and restoring force returning axially upward is produced in deformed circular protruding portion 26.

Thereby, when a gap is produced in the interface 50 by shrinkage of the resin, a restoring forces of the cylindrical protruding portion 24 and the circular protruding portion 26 function to close the gap respectively. And therefore, the first effect is exhibited. As a result of that, when the igniter assembly 1 is applied to a gas generator for an air bag, entry of moisture into the inside is prevented.

In the igniter assembly 1 thus obtained by setting a strength of the metal collar 20 and a injection molding condition of resin, helium leakage quantity prescribed in JIS Z2331 is less than 1 x 10⁻⁶ Pa·m³/s (air conversion).

In addition, in exhibiting the first effect by injection pressure of resin and keeping the pressure, the cylindrical stepped portion 25 in Figs. 1 and 3 is not essential but existence of the circular protruding portion 26 is necessary. However, existence of the cylindrical stepped portion 25 is preferable since the first effect becomes easily brought out, and arranging the circular stepped portion 27 is preferable since the second effect is brought out.

### (4) Embodiment of Application

An embodiment of a gas generator for an air bag using the igniter assembly 1 shown in Fig. 1 or 3 will be explained by Fig.4.

In this gas generator, a diffuser shell 101 having a gas discharging port 104 is combined with a closure shell 102 to close the diffuser shell 101 to form a housing 103.

In the housing 103, an ignition means comprising the igniter assembly 1, a gas generating agent 105 to be ignited and burnt by activation of the ignition means and to generate an operation gas for inflating an air bag (bag body), and a filter means 106 to clean and/or cool the operation gas generated by combustion of the gas generating agent 105.

In the center of the housing 103, an inner cylindrical member 108 having a plurality of flame-transferring hole 107 arranged in a circumferential wall is disposed. Inside of the inner cylindrical member 108, a space 109 to accommodate the ignition means is formed and a combustion chamber 110 to accommodate the gas generating agent 105 is formed radially outwardly.

The ignition means of the gas generator is composed of the igniter assembly 1 and a transfer charge 111 ignited and burnt by activation of the igniter assembly 1 and ejecting flame through a flame transferring hole 107 to ignite the gas generating agent. Among them, the igniter assembly 1 is fixed in the lower side of the inner cylindrical member 108. The inner cylindrical member 108 and the igniter assembly 1 are combined by a method of crimping an opening end portion 112 side of the inner cylindrical member 108 and fixing the metal collar 20 of the igniter assembly 1. As to the inner cylindrical member 108, the opening end portion 112 of the side in which the igniter assembly 1 is accommodated is connected to the closure shell 102 by welding.

In the combustion chamber 110, the gas generating agent 105 is accommodated, and outside the combustion chamber, the filter means 106 to clean and/or cool the operation gas generated by combustion of the gas generating agent 105 is disposed. This filter means 106 is formed cylindrically with a laminated wire mesh or the like, and a space which is a gas flowing passage is formed between an outer surface of the filter means 106 and an inner surface of the housing 103, and thereby, the whole filter means 106 can be used. An outer surface of this filter means 106 is supported by a porous cylindrical punching plate 114 and the filter means is prevented from swelling radially and outwardly.

Reference numeral 116 shows an underplate formed in a substantially ring shape, and this functions to support the gas generating agent 105 in the combustion chamber 110.

In the gas generator for an air bag shown in Fig. 4, when the igniter assembly 1 is activated, a transfer charge 111 disposed in the vicinity thereof is ignited and burnt to eject the flame through a flame-transferring hole 107 formed in the inner cylindrical member 108 into the combustion chamber 110. The gas generating agent 105 in the combustion chamber 110 is ignited and burnt by the flame to generate an operation gas. This operation gas is cleaned and/or cooled while passing through the filter means 106, and breaks the seal tape 115 closing the gas discharging port 104 to be discharged from a gas discharging port 104.

Since the igniter assembly 1 exhibits the first and second effect as above and entry of moisture into the inside of the gas generator for an air bag through the igniter assembly 1 is prevented, reliable operation is maintained for a long time.

## Claims

1. An igniter assembly (1) in which an igniter (10) and a substantially cylindrical metal collar (20) configured to hold the igniter (10) from outside are integrated by a resin (30) existing between the igniter (10) and the metal collar (20),
wherein the substantially cylindrical metal collar (20) has at least a cylindrical protruding portion (24) extending axially upward from a collar main body portion (22) so as to partially overlap a main body portion (12) of the igniter (10) in the axial direction,
in the cylindrical protruding portion (24), a contacting portion where a circular end surface (24b) contacts an outer surface (24a) is cut and formed in a cylindrical stepped portion (25) or a circular inclined surface (25),
the cylindrical stepped portion (25) or the cylindrical inclined surface (25) of the cylindrical protruding portion (24) and an inner surface are covered with the resin (30), an outer surface except for the cylindrical stepped portion (25) or the cylindrical inclined surface (25) is not covered with the resin (30), and the outer surface of the substantially cylindrical metal collar (20) and an outer surface of the resin (30) are flush with each other in the axial direction, and
the substantially cylindrical metal collar (20) further has a circular protruding portion (26) extending radially inward from the collar main body portion (22), a circular stepped portion (27) or a circular inclined surface is arranged on the lower surface side of the circular protruding portion (26), and the circular stepped portion (27) or the circular inclined surface is covered with the resin (30).

2. An igniter assembly (1) as claimed in claim 1, in which a material of the metal collar (20) is iron.

3. An igniter assembly (1) as claimed in claim 1, in which a material of the metal collar (20) is aluminum.

4. An igniter assembly (1) as claimed in either claim 1 or 2, wherein in the cylindrical protruding portion (24), the contacting portion where the circular end surface (24b) contacts an outer surface (24a) is cut and formed in the circular inclined surface (25).

## Patentansprüche

1. Zünderanordnung (1), bei der ein Zünder (10) und eine im wesentlichen zylindrische Metallbuchse (20), die dazu eingerichtet ist, den Zünder (10) von außen zu halten, durch ein Harz (30) verbunden sind, das zwischen dem Zünder (10) und der Metallbuchse (20) vorhanden ist,
wobei die im wesentlichen zylindrische Metallbuchse (20) wenigstens einen zylindrischen hervorragenden Abschnitt (24) hat, der sich axial aufwärts von einem Buchsenhauptkörperabschnitt (22) derart erstreckt, dass er teilweise einen Hauptkörperabschnitt (12) des Zünders (10) in der axialen Richtung überlappt,
in dem zylindrischen hervorragenden Abschnitt (24) ein Kontaktabschnitt, wo eine kreisförmige Stirnfläche (24b) eine Außenfläche (24a) berührt, ausgeschnitten und in einem zylindrischen abgestuften Abschnitt (25) oder einer kreisförmigen geneigten Oberfläche (25) ausgebildet ist,
der zylindrische abgestufte Abschnitt (25) oder die zylindrische geneigte Oberfläche (25) des zylindrischen hervorragenden Abschnittes (24) und eine Innenoberfläche mit dem Harz (30) bedeckt sind, eine Außenfläche mit Ausnahme des zylindrischen abgestuften Abschnittes (25) oder der zylindrischen geneigten Oberfläche (25) nicht mit dem Harz (30) bedeckt ist und die Außenoberfläche der im wesentlichen zylindrischen Metallbuchse (20) sowie eine Außenoberfläche des Harzes (30) in der axialen Richtung zueinander bündig sind, und
die im wesentlichen zylindrische Metallbuchse (20) weiterhin einen kreisförmigen hervorragenden Abschnitt (26) hat, der sich radial nach innen von dem Buchsenhauptkörper (22) erstreckt, ein kreisförmiger abgestufter Abschnitt (27) oder eine kreisförmige geneigte Oberfläche auf der Unterseite des kreisförmigen hervorragenden Abschnittes (26) angeordnet ist und der kreisförmige abgestufte Abschnitt (27) oder die kreisförmige geneigte Oberfläche mit dem Harz (30) bedeckt ist.

2. Zünderanordnung (1) nach Anspruch 1, bei der ein Material der Metallbuchse (20) Eisen ist.

3. Zünderanordnung (1) nach Anspruch 1, bei der ein Material der Metallbuchse (20) Aluminium ist.

4. Zünderanordnung (1) nach einem der Ansprüche 1 oder 2, bei der in dem zylindrischen hervorragenden Abschnitt (24) der Kontaktabschnitt, wo die kreisförmige Stirnfläche (24b) eine Außenoberfläche (24a) berührt, ausgeschnitten und in der kreisförmigen geneigten Oberfläche (25) ausgebildet ist.

## Revendications

1. Ensemble d'allumage (1) dans lequel un dispositif d'allumage (10) et un collier métallique sensiblement cylindrique (20) configuré pour maintenir le dispositif d'allumage (10) depuis l'extérieur, sont intégrés au moyen d'une résine (30) existant entre le dispositif d'allumage (10) et le collier métallique (20),
dans lequel le collier métallique sensiblement cylindrique (20) comporte au moins une partie cylindrique en saillie (24) s'étendant axialement vers le haut depuis une partie de corps principal de collier (22) de façon à recouvrir partiellement une partie de corps principal (12) du dispositif d'allumage (10) dans la direction axiale,
dans la partie cylindrique en saillie (24), une partie de contact, où une surface d'extrémité circulaire (24b) est en contact avec la surface extérieure (24a), est coupée et formée en une partie cylindrique étagée (25) ou une surface inclinée circulaire (25),
la partie cylindrique étagée (25) ou la surface cylindrique inclinée (25) de la partie cylindrique en saillie (24) et la surface intérieure sont recouvertes par la résine (30), la surface extérieure à l'exception de la partie cylindrique étagée (25) ou de la surface cylindrique inclinée (25) n'est pas recouverte par la résine (30), et la surface extérieure du collier métallique sensiblement cylindrique (20) et la surface extérieure de la résine (30) sont au même niveau l'une par rapport à l'autre dans la direction axiale, et
le collier métallique sensiblement cylindrique (20) comporte en outre une partie circulaire en saillie (26) s'étendant radialement vers l'intérieur depuis la partie de corps principal de collier (22), une partie circulaire étagée (27) ou une surface circulaire inclinée est agencée du côté de la surface inférieure de la partie circulaire en saillie (26) et la partie circulaire étagée (27) ou la surface circulaire inclinée est recouverte par la résine (30).

2. Ensemble d'allumage (1) selon la revendication 1, dans lequel le matériau du collier métallique (20) est du fer.

3. Ensemble d'allumage (1) selon la revendication 1, dans lequel le matériau du collier métallique (20) est de l'aluminium.

4. Ensemble d'allumage (1) selon la revendication 1 ou 2, dans lequel, dans la partie cylindrique en saillie (24), la partie de contact où la surface d'extrémité circulaire (24b) est en contact avec la surface extérieure (24a), est coupée et formée dans la surface circulaire inclinée (25).
